# EUROPÄISCHE PATENTANMELDUNG

(11) **EP 0 753 661 A1**
(43) Veröffentlichungstag der Anmeldung: **15.01.1997**
(21) Anmeldenummer: 96105505.0
(22) Anmeldetag: 06.04.1996
(51) Int. Cl.: F02M 59/08, F02M 63/02, F02D 41/38

(54) **Einspritzeinrichtung für einen Motor**

(30) Priorität: 14.07.1995 DE 19525694
(71) Anmelder: Krupp MaK Maschinenbau GmbH, 24159 Kiel (DE)
(72) Erfinder: Häfner, Reinhard, 24229 Dänisch-Niendorf (DE)
(74) Vertreter: Hansmann, Dierk, Dipl.-Ing.

(57) **Zusammenfassung**

Eine Einspritzeinrichtung für einen Motor mit Förderpumpen (23), insbesondere mit Schweröl-Förderpumpen, weist auf einer Steuerwelle (10) mehrere Mehrfachnocken (11,12;15,16;19-22) auf. Diese Mehrfachnocken (11,12;15,16;19-22) können zwei oder n Nockenerhebungen (13,14;17,18) in Abhängigkeit von der Anzahl der Motorzylinder aufweisen. Jeder Mehrfachnocken (11,12;15,16;19-22) ist mit einer Förderpumpe (23) versehen und arbeitet zeitlich mit mehreren Motorzylindern zusammen.

## Beschreibung

Die Erfindung bezieht sich auf eine Einspritzeinrichtung für einen Motor mit Förderpumpen, insbesondere Schweröl-Förderpumpen, die über Nocken einer Steuerwelle ansteuerbar sind und eine Förderung von einem Pumpendruckraum über einen Hochdrucksammelraum zu gesteuerten Einspritzventilen der Motorzylinder erfolgt.

Es ist bei Viertaktmittelmotoren vorhersehbar, daß ein Betrieb mit Schweröl möglich ist und Konstantdruck-Einspritzsysteme verwendet werden. Um eine Bereitstellung der Einspritzmenge bei richtigem Druck sicherzustellen sind darüber hinaus Schwerölförderpumpen erforderlich.

Der Erfindung liegt die Aufgabe zugrunde, bei einem Mittelschnelläufermotor mit mehreren Zylindern entsprechend viele Fördervorgänge durch Förderpumpen , die mit feinem Hochdrucksammelraum zusammenarbeiten, bei einem entsprechenden Kurbelwinkel zu ermöglichen.

Diese Aufgabe wird erfindungsgemäß durch die kennzeichnenden Merkmale des Anspruchs 1 gelöst. Weitere vorteilhafte Merkmale beinhalten die Unteransprüche.

Eine Steuerwelle des Motors weist mehrere Mehrfachnocken auf, über die mehrere zusammengeschaltete Förderpumpen ansteuerbar sind. Jedem Mehrfachnocken ist eine Förderpumpe zugeordnet. Es ist vorgesehen, daß entsprechend der Anzahl der Motorzylinder sowie der Anzahl der Nockenerhebungen auf dem Mehrfachnocken, die Anzahl der angesteuerten Pumpen bestimmbar sind.

Es ist erforderlich, daß wenn die Förderung von Einspritzmenge und Einspritzdruck so erfolgt, daß nach jedem Fördervorgang in einen Zylinder hinein eine Förderung von der Förderpumpe in das Konstantdruck-Einspritzsystem erfolgt. Außerdem soll der jeweilige Fördervorgang den gleichen zeitlichen Abstand von der Einspritzung haben. Ist dies nicht der Fall, so wird die schnelle elektronische Regelung gerade bei langsam laufenden Motoren zu Regelstörungen führen.

Beim Zusammenschalten der Schwerölförderpumpen für einen Konstantdruck-Einspritzsystem muß mit etwas höheren mittleren Antriebsmomenten gerechnet werden, als bei einer bisherigen Einspritzung, weil mit einem höheren Druck in einen Speicher gefördert wird, als dort selbst zur Wirkung kommt. Dies ergibt sich aus den Differenzflächen üblicher Ventile. Der Antrieb für eine solche Fördereinheit, sollte also in jedem Fall so kräftig sein, wie ein entsprechender für konventionelle Einspritzung. Außerdem verbietet es sich bei normalen Motoren, eine solche Förderpumpe am freien Motorende anzutreiben. Die logische Ausführung für den Anbau von Förderpumpen in das Konstantdruck-Einspritzsystem ist bei mittelschneilaufenden Viertaktmotoren also der Nahbereich des Nockenwellen-Zahnrades, sei es nun vom Motor wegbauend oder hin zu den Ventilantrieben.

Die Ventilantriebe von mittelschnell laufenden Viertaktmotoren werden auch zukünftig vorzugsweise noch durch Nockenantriebe betätigt werden. Eine Steuerwelie ist also auch dann nötig, wenn die Förderpumpen nicht mehr vom motorseitigen Teil der Steuerweile angetrieben würden.

Es werden Schweröl-Einspritzförderpumpen verwendet, sei es nun mechanisch mit Steuerkanten oder ventilgesteuerte oder elektronisch kontrollierte. Entscheidend ist, daß die Nocken zum Betätigen der Einspritzpumpen keine scharfe Auflaufkonturen mehr zu haben brauchen, sondern deutlich langsamer fördern können. Andererseits kann ein Mehrfachnocken die einzelnen Pumpen antreiben, so daß - entsprechend der Anzahl der Nockenerhebungen auf einem Nocken, die Zylinderanzahl durch diese Anzahl der Nockenerhebung geteilt werden kann. Ein Neunzylindermotor könnte demgemäß mit drei Einspritzpumpen und jeweils Dreifachnocken in den drei letzten, dem Steuerungsantrieb zugewandten Antriebslöchern beaufschlagt werden. Um aber eine möglichst geringe Stoßbeanspruchung des Steuerantriebes zu haben - will man doch die Leistung auch noch weiterhin steigern - so wird vorzugsweise vorgeschlagen, daß für jede Pumpe nur ein Doppelnocken verwendet wird. Dies ist bei geraden Zylinderzahlen möglich; es ergeben sich dann leicht versetzte Doppelnocken. Bei ungeraden ylinderzahlen gibt es zusätzlich einen Antrieb mit nur einem Nockenauflauf. Die Erhebungskurven aller Nockenbahnen stehen natürlich im Verhältnis von 360^{o} geteilt durch die Anzahl der Zylinder zueinander, und nach wie vor sind die doppelt angetriebenen Pumpen sehr nahe am Steuerungsantrieb.

In weiterer Ausgestaltung wird vorgeschlagen, daß der von Geschwindigkeit und Mitteldruck abhängige Solldruck im Konstantdruckspeicher direkt auf die Fördermengenregelung der Einspritzpumpen einwirkt. Dies kann sowohl rein elektrisch geschehen als auch im einfachsten Falle über die hydraulische Beaufschlagung eines Stellzylinders.

Desweiteren ist vorgesehen, daß auch bei abgesunkenem Druck im Konstantdruckspeicher der Motor so gestartet werden kann, daß etwa nach zehn Umdrehungen des Motors mit Startluft mindestens ein Druck von 300 bar anliegt, der es gestattet, den nötigen Startkraftstoff einzuspritzen.

Die vorgenannte Regulierung der Einspritzmenge der Förderpumpen wird mit dem Drehmoment des Motors verglichen, zum Beispiel als Funktion von Ladedruck oder Abgastemperatur, so daß eine Übereinspritzung durch ein hängengebliebenes Einspritzventil nicht vorkommen kann.

In einer Zeichnung sind mehrere Ausführungsbeispiele der Erfindung dargestellt, die im folgenden näher beschrieben werden. Es zeigen:
- Fig. 1: eine schematische Darstellung von zwei Dreifachnocken eines 6-Zylinder-Motors,
- Fig. 2: eine schematische Darstellung von zwei Vierfachnocken eines 8-Zylinder-Motors,
- Fig. 3: eine schematische Darstellung von zwei Zweifachnocken eine 8-Zylinder-Motors,
- Fig. 4: eine schematische Darstellung von zwei Zwei- bzw. von einem Dreifachnocken eines 7-Zylinder-Motors ,
- Fig. 5: eine schematische Darstellung von drei Dreifachnocken eines 9-Zylinder-Motors und
- Fig. 6: eine schematische Darstellung eines Konstantdruck-Einspritzsystems mit Hochdruckspeicher.

Eine Einspritzeinrichtung für einen Motor, weist zwei bis vier Förderpumpen, insbesondere Schweröl-Förderpumpen auf, die über Mehrfachnocken auf einer Steuerwelle ansteuerbar sind. Die Mehrfachnocken sind auf der Steuerwelle angeordnet, und weisen n-Nockenerhebungen entsprechend der Anzahl der Zylinder auf. Über jeden Mehrfachnocken wird eine Förderpumpe betrieben.

Die Förderpumpen 23 sind über Leitungen 35,36 unter Zwischenschaltung eines Hochdruckspeichers H eines Konstantdruck-Einspritzsystems K mit den einzelnen Einspritzventilen E verbunden. Zur Mengensteuerung ist den Einspritzventilen E ein elektronischer Regler R vorgeschaltet, in dem Signale über die Leitungen 38 von den Förderpumpen 23 aufgenommen und entsprechend zur Ansteuerung der Einspritzventile E verarbeitet werden. Ebenfalls werden dem Regler R über die Leitungen 37 Signale über den Druck im Hochdruckspeicher H zugeführt.

Bei der Steuerung wird Druck in einem Hochdruckbehälter des Speichers H auf einen gewünschten Druck gehalten. Aus diesem Druckbehälter werden die Einspritzventile E gespeist. Diese steuern im allgemeinen einen Zeitquerschnitt auf entsprechend der Zeit und Mengenvorgabe. Die Förderpumpen 23 befüllen den Hochdruckspeicher H. Die Pumpen 23 erhalten eine Mengenvollvorgabe, die sich aus dem gewünschten Einspritzdruck und der Einspritzmenge bestimmt. Jede Einspritzung ergibt einen Druckabbau im Hochdruckspeicher H. Jede Pumpenförderung ergibt kurzzeitig eine Druckerhöhung in diesem Speicher H.

Bei zeitlich ungeregelter Folge von Entnahme und Zuförderung ergibt sich während jeder Einspritzsteuerung ein nicht genau bekannter Druck im Hochdrucksystem K und damit ohne komplizierte Regelungen ungenaue Einspritzungen.

Das Ziel ist es, eine Entnahme und Befüllung des Hochdruckspeichers H zeitlich so zu koppeln, daß bei jeder Einleitung des Einspritzvorganges der gewünschte Einspritzdruck anliegt. Sonst würde die Steuerung des reinen Zeitquerschnitts über schwankende Drücke zu schwankenden Einspritzmengen führen.

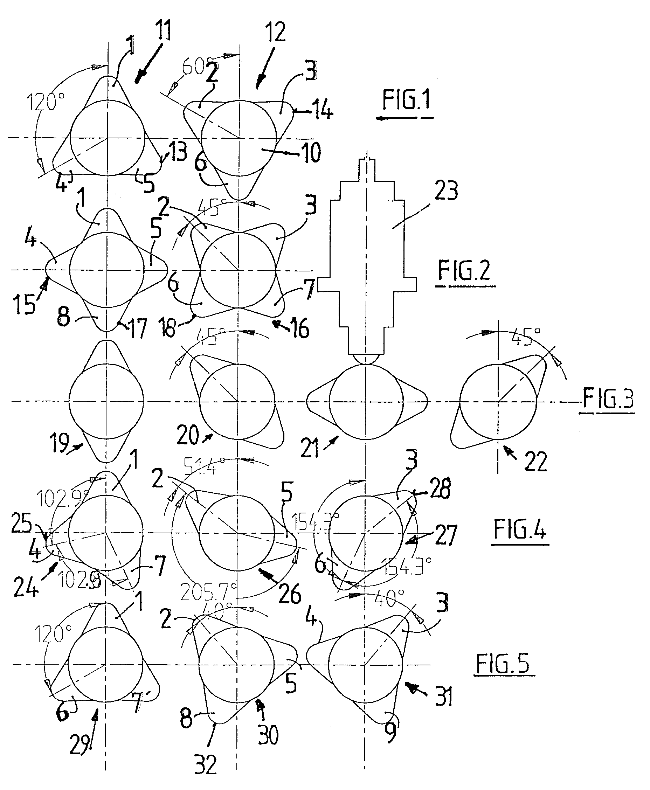

In Fig. 1 sind für einen 6-Zylindermotor auf einer gemeinsamen Steuerwelle 10 zwei Mehrfachnocken 11,12 mit jeweils drei Nockenerhebungen 13,14 vorgesehen. Diese Nockenerhebungen sind jeweils im Winkel von 120^{o} zueinander angeordnet. Auf jedem Mehrfachnocken 11,12 ist jeweils eine Förderpumpe angeordnet, die nicht näher eingezeichnet ist. Die Zündfolge bei dieser Ausführung ist beispielsweise 1,2,4,6,5,3,1, wobei die Zahl jeweils den Zylinder des Motors kennzeichnet. Das Prinzip ist bei jeder anderen gängigen Zündfolge möglich.

In Fig. 2 sind zwei Mehrfachnocken 15,16 mit jeweils vier Nockenerhebungen 17,18 für einen 8-Zylindermotor vorgesehen. Die Nockenerhebungen stehen unter einem Winkel von 90^{o} zueinander. Jeder Mehrfachnocken 15,16 weist eine Förderpumpe auf. Die Zündfolge bei dieser Ausführung ist beispielsweise 1,2,4,6,8,7,5,3,1. Es ist jede andere gängige Zündfolge denkbar.

In Fig. 3 sind vier Mehrfachnocken 19 bis 22 einen 8-Zylindermotor dargestellt. Die Nockenerhebungen stehen unter einem Winkel von 180^{o} zueinander. Jeder Mehrfachnocken 19 bis 22 weist eine Pumpe 23 auf. Die Zündfolge entspricht beispielsweise der des Ausführungsbeispiels nach Fig. 2.

In Fig. 4 ist ein 7-Zylindermotor mit Mehrfachnocken 24 und 26,27 dargestellt. diese Mehrfachnocken weisen zwei bzw. drei Nockenerhebungen 25 bzw. 28 auf. Die Nockenerhebungen stehen unter einem Winkel von 102,9^{o} zueinander.

Bei der Ausführung der Mehrfachnocken 26,27 mit zwei Nockenerhebungen 28 stehen diese unter einem Winkel von 205,7ₒ bzw. 154,3^{o} zueinander. Die Zündfolge ist beispielsweise 1,2,4,6,7,5,3,1. Jede andere, auch leicht unsymmetrische Zündfolge ist möglich, wenn die Zweifach- und Dreifachnocken diese Winkelfolge aufnimmt.

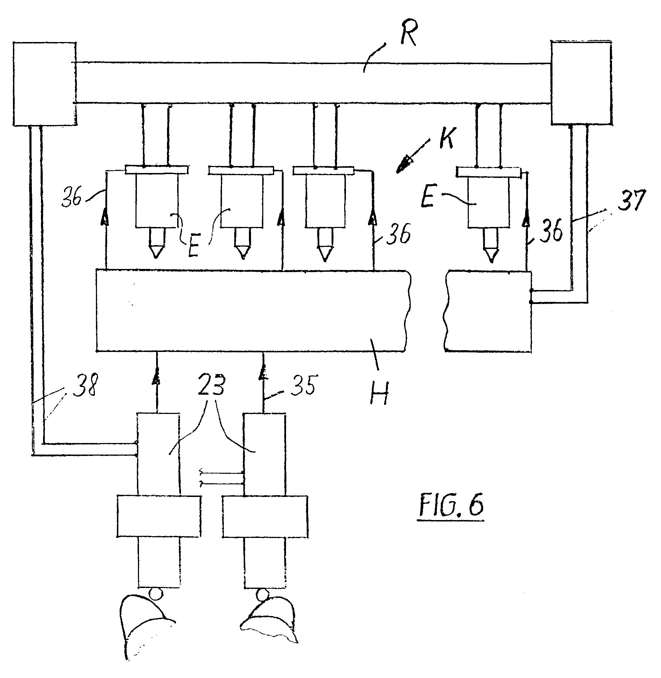

Bei der Ausführung gemäß Fig. 5 sind für einen 9-Zylindermotor drei Mehrfachnocken 29,30,31 mit Nockenerhebungen 32 vorgesehen, die jeweils unter einem Winkel von 120^{o} zueinander angeordnet sind. Die Zündfolge ist beispielsweise 1,2,4,6,8,9,7,5,3,1.

Jeder Mehrfachnocken der vorgenannten Ausführungen, gemäß Fig. 1 bis 5, sind mit einer separaten schwerölfähigen Förderpumpe bestückt, was nicht näher eingezeichnet ist.

## Patentansprüche

1. Einspritzeinrichtung für einen Motor mit Förderpumpen, insbesondere Schweröl-Förderpumpen, die über Nocken einer Steuerwelle ansteuerbar sind und eine Förderung von einem Pumpendruckraum über einen Hochdrucksammelraum zu gesteuerten Einspritzventilen der Motorzylinder erfolgt, dadurch gekennzeichnet, daß die Steuerwelle (10) Mehrfachnocken (13,14;15,16;19 bis 21;24;26,27; 29 bis 31) aufweist, über die mehrere zusammenschaltbare Förderpumpen (23) ansteuerbar sind und jede einem Mehrfachnocken zugeordnete Pumpe unter Zwischenschaltung eines Hochdruckspeichers (H) zur Förderung für mehrere Zylinder des Motors ausgebildet ist und zur Mengensteuerung zwischen den Förderpumpen (23) und den Einspritzventilen (E) ein elektronischer Regler (R) angeordnet ist..

2. Einspritzeinrichtung nach Anspruch 1, dadurch gekennzeichnet, daß die Förderung von Einspritzmenge und Einspritzdruck derart erfolgt, daß nach jedem Fördervorgang in einen Zylinder des Motors eine Förderung in den Hochdruckspeichers (H) des Konstantdruck-Einspritzsystems (K) erfolgt, wobei der zeitliche Abstand zwischen Einspritzung und Förderung bei allen Zylindern gleich ist.

3. Einspritzeinrichtung nach Anspruch 1 oder 2, dadurch gekennzeichnet, daß über die Mehrfachnocken der Steuerwelle (10) in Abhängigkeit von der Anzahl der Motorzylinder entsprechend viele Fördervorgänge bei einem Kurbelwinkel von 720^{o} durchführbar sind.

4. Einspritzeinrichtung nach einem der Ansprüche 1 bis 3, dadurch gekennzeichnet, daß entsprechend der Anzahl der Motorzylinder die Anzahl der Nockenerhebungen und der Pumpen (23) auf jedem Mehrfachnocken bestimmbar ist, derart, daß entsprechend der Anzahl der Nockenerhebungen auf einem Nocken, die Zylinderzahl durch diese Anzahl der Nockenerhebungen teilbar ist.

5. Einspritzeinrichtung nach einem der Ansprüche 1 bis 4, dadurch gekennzeichnet, daß bei geraden Motor-Zylinderzahlen (6-Zylinder, 8-Zylinder) für jede Förderpumpe ein Doppelnocken (19 bis 21; 26, 27) verwendet wird.

6. Einspritzeinrichtung nach einem der Ansprüche 1 bis 5, dadurch gekennzeichnet, daß die Mehrfachnocken auf der Steuerwelle (10) mit Nockenerhebungen von zwei bis n Nockenerhebungen ausführbar sind.

7. Einspritzeinrichtung nach einem der Ansprüche 1 bis 6, dadurch gekennzeichnet, daß der Solldruck im Speicher (H) über eine mechanische und/oder elektrische Einrichtung (Regler R) derart steuerbar ist, daß eine Regulierung der Einspritzmenge der Förderpumpen (23) durchführbar ist.

8. Einspritzeinrichtung nach Anspruch 7, dadurch gekennzeichnet, daß die Regulierung der Einspritzmenge derart durchführbar ist, daß bei einem bestimmten Überdruck die Fördermenge automatisch auf Null regelbar ist.

9. Einspritzeinrichtung nach einem der Ansprüche 1 bis 8, dadurch gekennzeichnet, daß im Steuerkreis der Förderpumpen (23) eine Vergleichseinrichtung angeordnet ist, die zur Vermeidung einer Übereinspritzung die Einspritzmenge der Förderpumpe (23) mit dem Drehmoment des Motors vergleicht.
